# DEMANDE DE BREVET EUROPEEN

(11) **EP 1 061 673 A1**
(43) Date de publication de la demande: **20.12.2000**
(21) Numéro de dépôt: 99460040.1
(22) Date de dépôt: 14.06.1999
(51) Int. Cl.: H04B 7/26, H04J 3/06

(54) **Système de synchronisation pour réseau de télécommunications DECT**

(71) Demandeur: TRT Lucent Technologies (SA), 92359 Le Plessis Robinson (FR)
(72) Inventeur: Bernadac, Pierre, 22730 Saint Quay Perros (FR)
(74) Mandataire: Ballot, Paul

(57) **Abrégé**

La présente invention concerne un système de synchronisation d'une pluralité de bornes radio (B1,B2,B3) dans un réseau de télécommunications DECT comportant une pluralité de stations de base (SB1,SB2). Chaque station de base étant connectée à un groupe de bornes radio voisines par des liens E1 ou T1 respectifs (L1,L2,L3) et chaque borne radio est reliée à une pluralité de terminaux radio DECT (T1,T2,T3,T4,T5) par une liaison radio DECT, les données échangées sur les liens E1 ou T1 (L1,L2,L3) étant arrangées en des trames temporelles d'un premier type et les données échangées sur les liaisons radio DECT étant arrangées en des trames temporelles d'un second type. Selon l'invention, les trames temporelles du premier type sont transmises de façon synchronisée entre l'ensemble des stations de base et l'ensemble des bornes radio, et elles transportent des données de synchronisation pour assurer la synchronisation des trames temporelles du second type.

## Description

La présente invention concerne un système de synchronisation des bornes radio dans un réseau de télécommunications DECT.

Le système européen de télécommunication numérique sans fil DECT est actuellement l'une des technologies les plus utilisées pour le raccordement d'abonnés téléphoniques. La bande de fréquences utilisée, de 1880 à 1900 MHz, est découpée en dix fréquences porteuses selon la technique d'Accès Multiple par Répartition en Fréquence (AMRF) avec une structure de trame pour chacune d'elles. Le découpage temporel de la trame est réalisé par une méthode d'Accès Multiples à Répartition dans le Temps (AMRT). Chaque trame est divisée en 24 intervalles de temps dont 12 servent à la transmission du terminal vers la borne radio et les 12 autres de la borne radio vers le terminal. Cette méthode porte la capacité du système à 120 canaux, chaque borne radio pouvant émettre sur chacun de ces canaux et simultanément sur 12 d'entre eux. Une communication bidirectionnelle ne nécessite que deux intervalles de temps ; le terminal peut alors consacrer les autres intervalles de temps à la surveillance des canaux disponibles dans sa zone de portée, et ce à toutes les fréquences.

L'architecture d'un réseau de télécommunications fonctionnant avec le système DECT est généralement la suivante : des terminaux fixes ou portables DECT communiquent par liaison radio avec des bornes radio, lesquelles sont reliées à des stations de base, lesquelles à leur tour sont connectées au réseau téléphonique classique par l'intermédiaire d'un autocommutateur ; chaque station de base est connectée à une ou plusieurs bornes radio comportant chacune un émetteur-récepteur. Lorsqu'une pluralité de bornes radio est reliée à la même station de base, on parle alors de bornes radio voisines ou adjacentes. Les bornes radio sont généralement reliées à leur station de base par des liens E1 (ou bien par des liens T1). Sommairement, un lien E1 est une liaison filaire numérique pour la transmission de données à 2Mbps. Le lien E1 est défini dans la norme G704.

Pour un bon fonctionnement du réseau, les bornes radio sont synchronisées à plusieurs niveaux. Les bornes radio sont tout d'abord synchronisées au niveau trame, c'est-à-dire qu'elles sont synchronisées pour que les trames DECT des différentes bornes radio du réseau soient synchrones. Cela permet notamment de détecter plus facilement les collisions de données lorsque deux bornes radio émettent sur le même canal radio. Cette synchronisation est appelée synchronisation de trame.

Les bornes radio voisines du réseau sont également synchronisées au niveau de la multitrame DECT. On rappelle qu'une multitrame DECT est composée de 16 trames DECT et que chaque trame DECT renferme des informations de signalisation différentes à destination des terminaux, à savoir que la trame de rang n dans une multitrame DECT ne contient pas les mêmes informations de signalisation que la trame de rang n+1. Par contre, cette trame de rang n contient les mêmes informations de signalisation qu'une trame de rang n d'une multitrame DECT d'une borne radio voisine. Ainsi, si les bornes radio du réseau sont synchronisées au niveau multitrame, cela permet d'assurer une continuité dans les informations de signalisation reçues par un terminal lorsque celui-ci change de borne radio et bascule d'une borne radio B1 vers une borne radio voisine B2. Avant le basculement, le terminal communique avec la borne radio B1 par l'intermédiaire de la trame de rang n de la multitrame se rapportant à la borne radio B1 et, après le basculement, il communique avec la borne radio B2 par l'intermédiaire de la trame de rang n+1 de la multitrame se rapportant à la borne radio B2. Cette synchronisation est appelée synchronisation de multitrame.

Selon le même principe, les bornes radio voisines dans un réseau DECT sont également synchronisées au niveau du numéro de multitrame DECT. En effet, chaque multitrame DECT possède un numéro correspondant à son rang dans un bloc de 2²⁴ multitrames. Ce numéro codé sur 24 bits est notamment utilisé pour crypter si besoin les communications. Les bornes radio voisines du réseau sont synchronisées à ce niveau pour que, lorsqu'un terminal bascule d'une borne radio vers une autre borne radio voisine, les multitrames émises par ces deux bornes radio aient le même numéro. La nouvelle borne radio est alors en mesure de poursuivre le cryptage de la communication commencé par la première borne radio. Cette synchronisation est appelée synchronisation de numéro de multitrame.

Enfin, les bornes radio voisines du réseau sont synchronisées au niveau des fréquences porteuses de réception. Chaque station de base diffuse en effet en permanence une information à destination de tous les terminaux indiquant la fréquence de réception de ses bornes radio pour la trame DECT à suivre. Ainsi, un terminal qui cherche à émettre vers la station de base peut connaître la fréquence porteuse à utiliser pour communiquer avec elle lors de la prochaine trame DECT. Cette information est généralement désignée par le terme « primary Scanning Carrier Number » (PSCN). Cette fréquence porteuse de réception change de façon périodique à chaque trame DECT : f0, f1 jusqu'à f9 puis de nouveau f0, etc... Les bornes radio voisines sont donc synchronisées pour avoir à tout moment la même fréquence porteuse de réception. Cette synchronisation est appelée synchronisation de porteuse de réception ou, dans le langage technique, synchronisation de "scanning radio".

Pour mettre en oeuvre ces quatre niveaux de synchronisation, on prévoit généralement une source de synchronisation pour chaque groupe de bornes radio voisines. Cette source est reliée aux bornes radio voisines par l'intermédiaire d'un lien série de type RS422. Cette source est chargée de délivrer des impulsions de synchronisation, par exemple toutes les 10 ms pour la synchronisation de trame, toutes les 100 ms pour la synchronisation de fréquence porteuse, toutes les 160 ms pour la synchronisation de multitrame et toutes les 2²⁴ x 160 ms pour la synchronisation de numéro de multitrame.

Bien que simple à mettre en oeuvre, cette solution a cependant pour inconvénient de nécessiter un grand nombre de câbles pour relier le groupe de bornes radio voisines à la source de synchronisation.

Un but de l'invention est de proposer un système de synchronisation des bornes radio permettant de réduire sensiblement le nombre des câbles nécessaires à la connexion de la source.

Pour ce faire, on prévoit selon l'invention de connecter la source de synchronisation à la station de base, de synchroniser à l'aide de cette source les trames échangées sur les liens E1 ou T1, et d'introduire dans ces trames des données pour la synchronisation des bornes radio entre elles.

L'invention a donc pour objet un système de synchronisation d'une pluralité de bornes radio dans un réseau de télécommunications DECT comportant une pluralité de stations de base, chaque station de base étant connectée à un groupe de bornes radio voisines par des liens E1 ou T1 respectifs, chaque borne radio étant par ailleurs reliée à une pluralité de terminaux radio DECT par une liaison radio DECT, les données échangées sur les liens E1 ou T1 étant arrangées en des trames temporelles d'un premier type et les données échangées sur les liaisons radio DECT étant arrangées en des trames temporelles d'un second type,
caractérisé en ce que les trames temporelles du premier type sont transmises de façon synchronisée entre l'ensemble des stations de base et l'ensemble des bornes radio, et en ce que les trames temporelles du premier type transportent des données de synchronisation pour assurer la synchronisation des trames temporelles du second type.

Avantageusement, les trames temporelles du premier type transportent également des données de synchronisation pour assurer la synchronisation des multitrames de second type des bornes radio d'un même groupe, des données pour assurer la synchronisation des porteuses de réception des trames temporelles de second type et un numéro de multitrame pour les multitrames de second type.

Cette solution ne nécessite qu'un câble par groupe de bornes radio voisines puisque la source de synchronisation est uniquement connectée à la station de base, laquelle transmet la synchronisation aux bornes radio à travers les liens E1 (ou T1).

D'autres caractéristiques et avantages de l'invention apparaîtront à la lecture de description détaillée qui suit et qui est faite en référence aux dessins annexés, parmi lesquels :
la figure 1 représente un schéma d'un réseau de télécommunications pouvant fonctionner avec le système de synchronisation de l'invention ;
la figure 2 représente un schéma plus détaillé des moyens nécessaires à la mise en oeuvre de l'invention ;

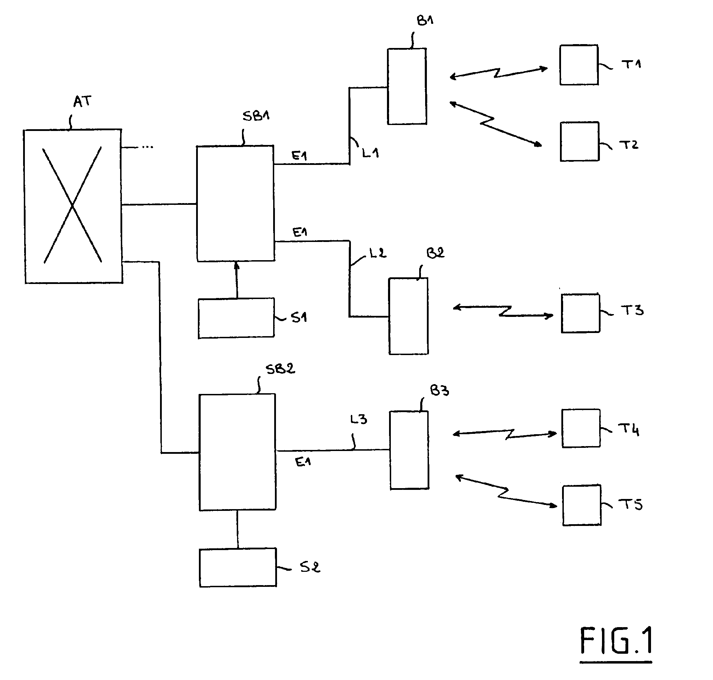

Le réseau de télécommunications DECT illustré à la figure 1 comporte un autocommutateur AT relié d'une part au réseau téléphonique classique et d'autre part à une pluralité de stations de base, SB1 et SB2. Ces stations de base sont reliées à l'autocommutateur AT par des liaisons filaires. La station de base SB1 est connectée à deux bornes radio voisines, B1 et B2, par l'intermédiaire de deux liens de type E1, respectivement L1 et L2. D'autre part, la station de base SB2 est connectée par l'intermédiaire d'un lien L3 de type E1 à une station de base SB3. Des terminaux portables ou fixes, T1, T2, T3, T4 et T5 sont en liaison radio avec les bornes radio B1, B2 et B3. On pourrait bien entendu envisager d'utiliser des liens de type T1 à la place des liens de type E1.

Selon l'invention, les trames échangées sur les liens L1, L2 et L3 sont tout d'abord synchronisées sur une source de synchronisation S1. Dans un lien E1, ces trames ont une durée de 125 µs et comporte chacune 32 intervalles de temps. Ces trames sont appelées dans la suite de la description trames de premier type. En référence à la figure 1, les trames de premier type échangées sur les liens L1 et L2 sont synchronisées par la source de synchronisation S1 connectée à la station de base SB1 et les trames de premier type échangées sur le lien L3 sont synchronisées par une source de synchronisation S2. Une source identique est prévue pour chaque station de base du réseau. Cette source est typiquement un récepteur GPS chargé de délivrer des impulsions de synchronisation.

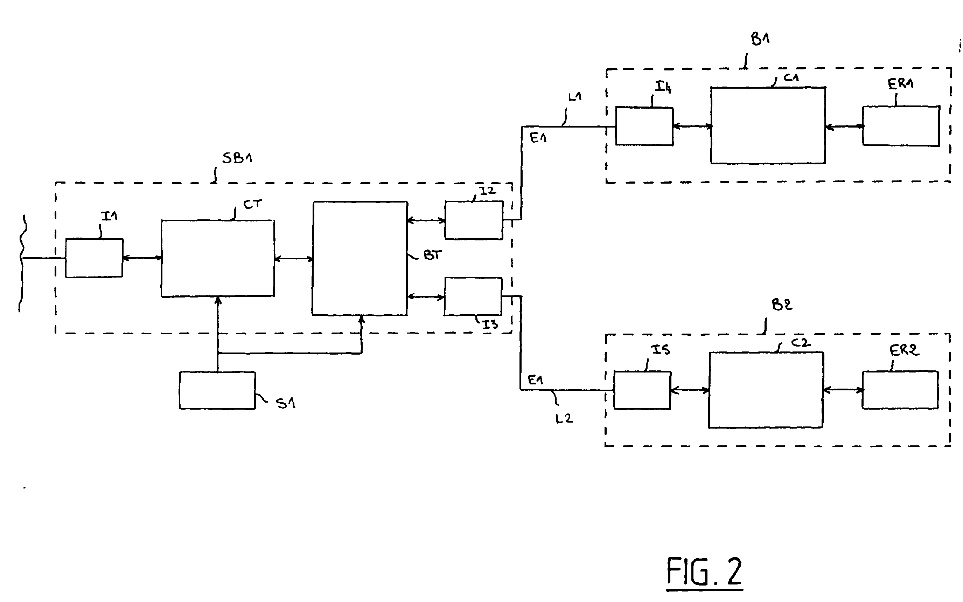

Par ailleurs, selon l'invention, des données de synchronisation sont également introduites dans les trames de premier type. Ces données sont destinées aux bornes radio du réseau et vont permettre de synchroniser les trames DECT des liaisons radio du réseau. Les trames DECT sont appelées dans la suite de la description trames de second type. Le système de synchronisation de l'invention est illustré de façon plus détaillée à la figure 2.

La figure 2 représente un schéma détaillé de la station de base SB1 et des bornes radio B1 et B2 voisines de la figure 1. La station de base SB1 comporte une première interface I1 pour communiquer à travers un lien E1 avec l'autocommutateur AT. Un circuit tampon CT est par ailleurs prévu pour réaliser la frontière entre la partie de la station de base qui est synchronisée sur l'autocommutateur et la partie de la station de base qui est synchronisée sur la source de synchronisation S1. La source de synchronisation S1 est bien entendu connectée à ce circuit tampon. Les trames de premier type issues de ce circuit tampon CT coté terminal sont ensuite traitées par un bloc de traitement BT chargé d'introduire dans ces trames des données de synchronisation. Les données introduites dans ces trames sont destinées à indiquer aux bornes B1 et B2 le début d'une trame de second type, le début d'une multitrame de second type, le numéro de multitrame de second type et la trame de second type ayant pour fréquence porteuse de réception la fréquence f0. Ce bloc BT est également chargé, dans le sens émission, de générer les trames de premier type destinées aux bornes radio B1 et B2 à partir des trames issues du circuit tampon CT et, dans le sens réception, de générer une trame unique à partir de celles de premier type provenant des bornes radio B1 et B2. A noter que, dans le cas de la station de base SB2, il n'est pas nécessaire de transmettre des données autres que les données indiquant le début des trames de second type puisque la borne radio B3 rattachée à cette station de base ne possède pas de borne radio voisine.

Les données de synchronisation sont par exemple introduites dans le dernier intervalle de temps des trames de premier type. On prévoit par exemple de réserver dans cet intervalle de temps :
- un champ de 2 bits pour la synchronisation des trames de second type,
- un champ de 2 bits pour la synchronisation des multitrames de second type,
- un champ de 2 bits pour la synchronisation de porteuse de réception, et
- un champ de 2 bits pour la synchronisation de numéro de multitrame.

Si on considère qu'une trame de second type (10 ms) correspond en durée à 80 trames de premier type (125 µs), il suffit d'envoyer une information, par exemple la donnée binaire « 10 », toutes les 80 trames de premier type pour indiquer à la borne radio que le début de la prochaine trame de premier type correspond au début d'une trame de second type. En pratique, le bloc de traitement BT introduit dans chaque trame de premier type une donnée, la valeur de cette donnée variant à l'approche du début de la trame de second type. Par exemple, le bloc BT introduit la donnée « 10 » dans les trois trames de premier type précédant le début d'une trame de second type et la donnée « 01 » dans les 77 autres trames.

Selon le même principe, il faut envoyer toutes les 1280 (80*16) trames de premier type à la borne radio une information lui indiquant le début d'une multitrame de second type. A cet effet, le bloc de traitement BT introduit la donnée « 10 » dans la trame de premier type précédant le début d'une multitrame de second type et la donnée « 01 » dans les 1279 autres trames de premier type.

Pour la synchronisation de porteuse de réception, il faut envoyer toutes les 800 (80*10) trames de premier type une information indiquant la fréquence porteuse f0. A cet effet, le bloc BT introduit donc la donnée « 10 » dans la trame de premier type précédant la trame de second type ayant pour fréquence porteuse de réception la fréquence f0 et la donnée « 01 » dans les 799 autres trames de premier type.

Enfin, pour la synchronisation de numéro de multitrame, on dispose de 1280 (16*80) trames de premier type pour transmettre les 24 bits du numéro. En pratique, le bloc BT introduit dans les 80 trames de premier type correspondant à la première trame de second type, les 2 bits de poids fort du numéro de multitrame, dans les 80 trames de premier type correspondant à la deuxième trame de second type, les 2 bits suivants du numéro, et ainsi de suite pour les 12*80 premières trames de premier type. Des données de vérification ou de correction d'erreurs sont par ailleurs introduites dans les 4*80 trames de premier type restantes.

Les trames de premier type ainsi modifiées sont transmises aux bornes radio B1 et B2 par les liens L1 et L2. Les liens L1 et L2 sont munies, à leurs extrémités, d'interfaces appropriées pour le transport des trames de premier type, respectivement I2, I4 pour L1 et I3, I5 pour L2. A noter que l'on prévoit de supprimer ou de court-circuiter les filtres de gigue présents aux extrémités du lien dans les interfaces. Il s'agit en effet de respecter la norme EN 300 175-3 annexe E qui préconise que la trame de second type émise par une borne radio doit commencer 15µs ±2µs après l'impulsion de synchronisation de trame correspondant à un début de trame de second type, laquelle impulsion est fournie par la source de synchronisation correspondante S1 ou S2.

Dans les bornes radio B1 et B2, les trames de premier type sont traitées par des blocs de traitement, respectivement C1 et C2. Ces blocs sont chargés à la fois :
- d'extraire les données de synchronisation des trames de premier type,
- de transmettre ces données de synchronisation à des émetteurs-récepteurs, respectivement ER1 et ER2, en vue de synchroniser les trames de second type qu'ils émettent, et
- dans le sens émission, de convertir les trames de premier type issues de l'interface I4 ou I5 en trames de second type, et dans le sens réception, de convertir les trames de second type en trames de premier type.

## Revendications

1. Système de synchronisation d'une pluralité de bornes radio (B1,B2,B3) dans un réseau de télécommunications DECT comportant une pluralité de stations de base (SB1,SB2), chaque station de base étant connectée à un groupe de bornes radio voisines par des liens E1 ou T1 respectifs (L1,L2,L3), chaque borne radio étant par ailleurs reliée à une pluralité de terminaux radio DECT (T1,T2,T3,T4,T5) par une liaison radio DECT, les données échangées sur les liens E1 ou T1 (L1,L2,L3) étant arrangées en des trames temporelles d'un premier type et les données échangées sur les liaisons radio DECT étant arrangées en des trames temporelles d'un second type,
caractérisé en ce que les trames temporelles du premier type sont transmises de façon synchronisée entre l'ensemble des stations de base et l'ensemble des bornes radio, et en ce que les trames temporelles du premier type transportent des données de synchronisation pour assurer la synchronisation des trames temporelles du second type.

2. Système de synchronisation selon la revendication 1, caractérisé en ce que les trames temporelles du premier type transportent des données de synchronisation pour assurer la synchronisation de multitrames de second type entre les bornes radio d'un même groupe.

3. Système de synchronisation selon la revendication 1 ou 2, caractérisé en ce que les trames temporelles du premier type transportent un numéro de multitrame de second type.

4. Système de synchronisation selon l'une des revendications 1 à 3, caractérisé en ce que les trames temporelles du premier type transportent des données de synchronisation pour assurer la synchronisation des fréquences porteuses de réception des trames temporelles de second type pour les bornes radio d'un même groupe.

5. Système de synchronisation selon l'une des revendications précédentes, caractérisé en ce qu'un champ de deux bits est alloué dans chaque trame de premier type pour le transport de chacune des données de synchronisation.
